# EUROPÄISCHE PATENTANMELDUNG

(11) **EP 0 651 167 A1**
(43) Veröffentlichungstag der Anmeldung: **03.05.1995**
(21) Anmeldenummer: 94114847.0
(22) Anmeldetag: 21.09.1994
(51) Int. Cl.: F16C 29/02, F16C 29/00, B23Q 1/26

(54) **Nachstellbare Längsführung für Maschinenaggregate**

(30) Priorität: 28.10.1993 DE 4336886; 20.11.1993 DE 4339658
(71) Anmelder: Josef Scheppach Maschinenfabrik GmbH & Co., D-89335 Ichenhausen (DE)
(72) Erfinder: Scheppach, Fritz, Ing., D-89335 Ichenhausen (DE)
(74) Vertreter: Munk, Ludwig, Dipl.-Ing.

(57) **Zusammenfassung**

Bei einer Längsführung für Maschinenaggregate, insbesondere von Holzbearbeitungsmaschinen, mit wenigstens zwei mit Führungsflächen (4, 7; 4a, 7a) versehenen Führungsbauteilen (1, 2), von denen das eine das andere durchgreift und eines fest und eines verschiebbar angeordnet ist, lassen sich dadurch eine einfache Herstellung und hohe Führungsgenauigkeit erreichen, daß das innere Führungsbauteil (1) als biegesteifer Träger ausgebildet ist, der wenigstens zwei einander diametral gegenüberliegende, achsparallele Führungsflächen (4, 4a) aufweist, die quer zur Achsrichtung in formschlüssigem Eingriff mit zugeordneten Führungsflächen (7, 7a) des äußeren Führungsbauteils (2) sind, das als das innere Führungsbauteil (1) außerhalb der Führungsflächen (4, 7; 4a, 7a) mit Abstand umgreifendes Gehäuse ausgebildet ist, dessen die Führungsflächen (4, 7; 4a, 7a) enthaltende Bereiche mittels einer Spanneinrichtung (14, 15) zusammenspannbar sind.

## Beschreibung

Die Erfindung betrifft eine Längsführung für Maschinenaggregate, insbesondere von Holzbearbeitungsmaschinen, gemäß Oberbegriff des Anspruchs 1.

Die bekannten Längsführungen dieser Art bestehen normalerweise aus zwei Führungsstangen, die durch zugeordnete Führungsbüchsen hindurchgeführt sind, wobei entweder die Führungsstangen oder die Führungsbüchsen an einem Maschinengestell befestigt und die jeweils anderen Führungselemente in ein Gehäuse des Zu führenden Maschinenaggregats integriert sind. Eine Anordnung dieser Art ergibt zwar die erwünschte Kippsicherheit und Beweglichkeit, erfordert jedoch einen hohen Aufwand. In diesem Zusammenhang ist nämlich davon auszugehen, daß bei der bekannten Anordnung eine Einstellung bzw. Nachstellung des Führungsspiels zwischen Führungsstangen und Führungsbüchsen nicht möglich ist. Die verlangte Genauigkeit muß daher von Anfang an gewährleistet sein, was die Herstellung verteuert. Außerdem ist hierbei auch ein Verschleißausgleich nicht möglich, was sich ungünstig auf die erzielbare Lebensdauer auswirkt. Hinzu kommt, daß die bekannte Anordnung einen vergleichsweise großen Achsabstand der Führungsstangen erfordert, so daß sich auch eine vergleichsweise sperrige Bauweise ergibt.

Hiervon ausgehend ist es daher die Aufgabe der vorliegenden Erfindung, eine Längsführung gattungsgemäßer Art zu schaffen, die einfach und kompakt aufgebaut und kostengünstig herstellbar ist und die dennoch eine hohe Führungsgenauigkeit gewährleistet.

Diese Aufgabe wird erfindungsgemäß durch das Kennzeichen des Anspruchs 1 gelöst.

Diese Maßnahmen stellen sicher, daß durch gezielte Verformung des äußeren Führungsbauteils das Spiel zwischen den Führungsflächen des äußeren Führungsbauteils und des inneren Führungsbauteils reduziert bzw. ganz ausgeschaltet werden kann. Hierdurch sind daher nicht nur eine hohe Führungsgenauigkeit, sondern auch die Einstellung der gewünschten Reibung bis hin zur gegenseitigen Blockierung möglich. Dennoch werden nur vergleichsweise wenig präzise hergestellte Teile benötigt. Die erfindungsgemäße Anordnung ist daher mit geringem Aufwand herstellbar. Zudem ergibt sich eine vergleichsweise schlanke Bauweise, ohne daß aber Verkantungsgefahr in Kauf genommen werden müßte. Das das äußere Führungsbauteil bildende Gehäuse ermöglicht einen einfachen Anbau eines zu führenden Aggregats an der erfindungsgemäßen Längsführung bzw. einen leichten Anbau der kompletten Führung an ein Maschinengestell. Die erfindungsgemäße Längsführung läßt sich daher in vorteilhafter Weise auch universell einsetzen, ohne daß Sonderkonstruktionen erforderlich wären.

Vorteilhafte Ausgestaltungen und zweckmäßige Fortbildungen der übergeordneten Maßnahmen sind in den Unteransprüchen angegeben. So kann das innere Führungsbauteil zweckmäßig als Stangen- oder Rohrprofilabschnitt mit umfangsseitig angebrachten, einander gegenüberliegenden, die Führungsflächen enthaltenden Führungselementen ausgebildet sein, die zweckmäßig über den Umfang des sie tragenden, inneren Führungsbauteils in radialer Richtung vorspringen. Diese Fortbildung ergibt mit einfachen Mitteln eine hohe Biegesteifigkeit des inneren Führungsbauteils und ermöglicht mit einfachen Mitteln eine hohe Genauigkeit der dortigen Führungsflächen.

Eine weitere zweckmäßige Maßnahme kann darin bestehen, daß zumindest das äußere Führungsbauteil als Strangpreßprofilabschnitt ausgebildet ist, das zweckmäßig aus Leichtmetall besteht. Hierbei ergibt sich auf besonders kostengünstige Weise die erforderliche Verformbarkeit. Dennoch wird auch im Falle angeformter Führungsflächen eine hohe Genauigkeit gewährleistet, was auch inneren Führungsbauteil von Vorteil ist. Außerdem ist es möglich ein derartiges Führungsbauteil in einen größeren, auch als Gehäuse für weitere Funktionsteile fungierenden Profilabschnitt zu integrieren.

Vorteilhaft kann die Spanneinrichtung wenigstens eine eine führungsflächenseitige Wand des äußeren Führungsbauteils übergreifende Spannbacke aufweisen, die biegesteifer als die benachbarten Wände des äußeren Führungsbauteils ist und durch Spannorgane mit einem diametral gegenüberliegenden, biegesteifen Element verbunden ist. Diese Maßnahmen ergeben einen einfachen und übersichtlichen Aufbau sowie eine einfache und übersichtliche Bedienbarkeit.

Eine besonders einfache Gestaltung des äußeren Führungsbauteils läßt sich dadurch erreichen, daß die Spanneinrichtung zwei diametral einander gegenüberliegende, biegesteife Spannbacken aufweist, die durch die vorzugsweise als Zuganker ausgebildeten Spannorgane miteinander verbunden sind. Hierbei lassen sich in vorteilhafter Weise auf beiden Seiten des äußeren Führungsbauteils gleiche Bau- und Verformungsverhältnisse erreichen.

In weiterer Fortbildung der übergeordneten Maßnahmen können die Spannbacken jeweils eine den die Führungsflächen enthaltenden Bereich der benachbarten Wandung des äußeren Führungsbauteils aufnehmende, nach innen offene Rinne aufweisen. Hiermit wird eine exakte Krafteinleitung im Bereich der Führungsflächen gewährleistet, was eine symmetrische Verformung des äußeren Führungsbauteils gewährleistet.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung entnehmbar.

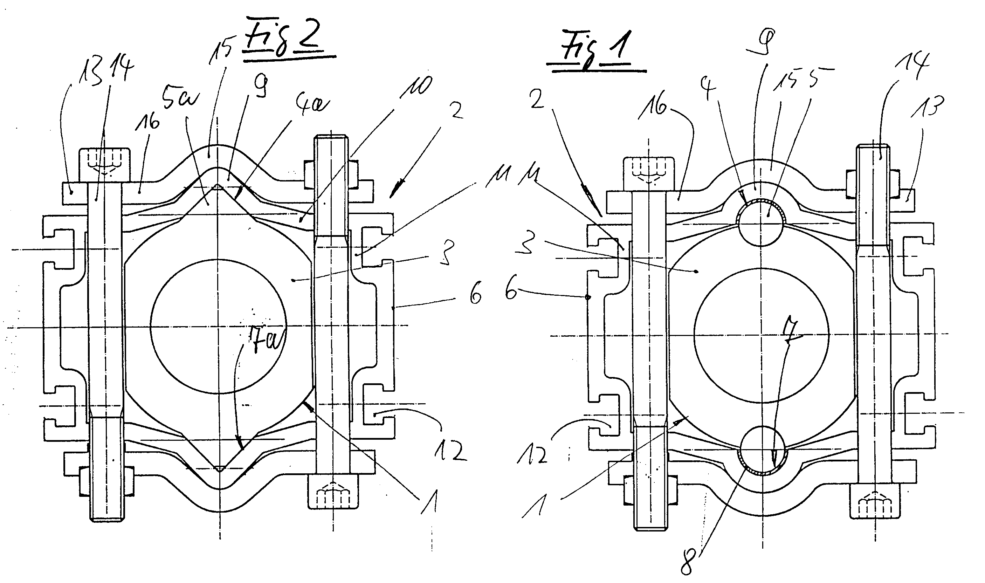

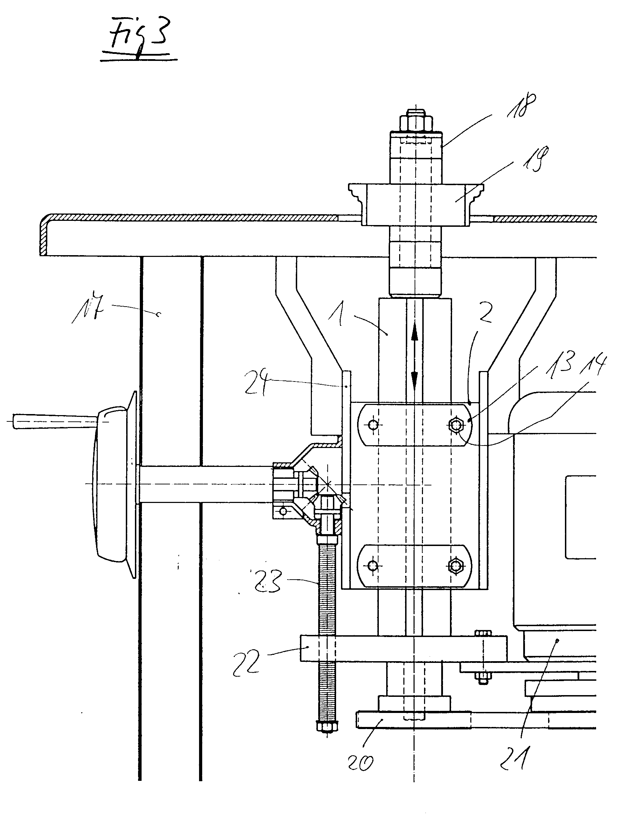

Nachstehend werden bevorzugte Ausführungs- und Anwendungsbeispiele anhand der Zeichnung näher erläutert. Hierbei zeigen:
**Figur 1**
   Einen Radialschnitt durch eine erfindungsgemäße Längsführung mit mehrteilig aufgebautem, innerem Führungsbauteil,
**Figur 2**
   einen Radialschnitt durch eine erfindungsgemäße Längsführung mit einteilig ausgebildetem, innerem Führungsbauteil,
**Figur 3**
   ein Anwendungsbeispiel in Form einer axial verstellbaren Frässpindellagerung,
**Figur 4**
   ein weiteres Anwendungsbeispiel in Form eines in der Höhe verstellbaren Kreissägenaggregats und
**Figur 5**
   ein weiteres Beispiel einer erfindungsgemäßen Längsführung in Figuren 1 und 2 entsprechender Darstellung.

Die den Figuren 1 und 2 zugrundeliegenden Längsführungen sind im Prinzip gleich aufgebaut. Für gleiche Teile finden daher auch gleiche Bezugszeichen Verwendung. Die genannte Längsführung besteht aus einem inneren Führungsbauteil 1, einem dieses umfassenden, äußeren Führungsbauteil 2 und einer Klemmeinrichtung zum gegenseitigen Verspannen der beiden Führungsbauteile 1, 2. Das innere Führungsbauteil 1 ist als rohr- oder stangenförmiger Träger ausgebildet, der eine hohe Biegesteifigkeit aufweist. Zur Bildung dieses Trägers kann ein Stangen- oder Rohrprofilabschnitt 3 Verwendung finden. Dieser kann in der Regel aus im Strangpreßverfahren leicht verarbeitbarem Leichtmetall bestehen, wobei die erforderliche Biegesteifigkeit durch dicke Wandstärken bzw. die Verwendung von Vollmaterial erzielt wird. Es wäre aber auch denkbar, ein Stahlprofil vorzusehen.

Im vorliegenden Fall liegt dem inneren Führungsbauteil 1 jeweils ein von einem Rohr mit abgeflachten Flanken ausgehender, zu der zu den Abflachungen parallelen Diametralebene symmetrischer Profilabschnitt 3 zugrunde. Dieser besitzt zur Bewerkstelligung einer ausreichender Biegesteifigkeit eine vergleichsweise dicke Wandstärke. Der Profilabschnitt 3 trägt zwei an seinem Umfang einander diametral gegenüberliegende, zur zu den abgeflachten Flanken parallelen Diametralebene symmetrische, achsparallele Führungsflächen 4 bzw. 4a, die in radialer Richtung über den Umfang des Profilabschnitts 3 vorspringen. Hierzu ist der Profilabschnitt 3 mit umfangsseitig angeordneten, die Führungsflächen 4 bzw. 4a enthaltenden, leistenförmigen Führungselementen 5 bzw. 5a versehen.

Diese sind bei der Ausführung gemäß Figur 1 als in den Profilabschnitt 3 eingeformte Rillen eingelegte und zweckmäßig durch eine Klebverbindung befestigte Führungsstangen ausgebildet. Derartige Führungsstangen stehen als hochpräzise Normteile kostengünstig zur Verfügung. Bei der Ausführung gemäß Figur 2 sind die Führungselemente 5a an den Profilabschnitt 3 angeformt. Hierbei handelt es sich um im Querschnitt trapezförmige Leisten. Selbstverständlich könnten auch andere Querschnittsformen, beispielsweise eine zur selben Außenkontur wie die Anordnung gemäß Figur 1 führende Querschnittsform vorgesehen sein. Ebenso wäre es denkbar, einen breiteren Trapezquerschnitt als vorgesehen, vorzusehen. Bei der Ausführung gemäß Figur 1 ergeben sich durch die obere Umfangshälfte der die Führungselemente 5 bildenden Führungsstangen gebildete, nach außen halbkreisförmig konvexe Führungsflächen 4. Bei der Ausführung gemäß Figur 2 sind ebene, nach außen dachförmig aufeinander zulaufende Führungsflächen 4a vorgesehen. Bei der einteiligen Ausführung, kann ein aus Leichtmetall bestehender Stranpreßprofilabschnitt Verwendung finden, der eine hohe Genauigkeit gewährleistet. Zur Erzielung einer hohen Formfestigkeit kann einfach eine entsprechend dicke Wandstärke oder vorzugsweise ein Vollprofil Verwendung finden.

Das äußere Führungsbauteil 2 ist als im Querschnitt kastenförmiges Gehäuse ausgebildet. Dieses kann einfach durch einen aus Leichtmetall bestehenden StrangpreßProfilabschnitt 6 gebildet werden. Die Wandstärke des das äußere Führungsbauteil 2 bildenden, im Querschnitt kastenförmigen Profilabschnitts 6 ist kleiner als die Wandstärke des dem inneren Führungsbauteil 1 zugrundeliegenden Profilabschnitts 3, so daß die Wände des kastenförmigen Profilabschnitts 6 vergleichsweise biegeweich sind, wenngleich sich insgesamt eine hohe Formsteifigkeit des Profilabschnitts 6 ergibt. Dieser ist mit angeformten, den Führungsflächen 4 bzw. 4a des inneren Führungsbauteils 3 zugeordneten Führungsflächen 7 bzw. 7a versehen. Diese sind so ausgebildet, daß sie einen quer zur Achsrichtung formschlüssigen Eingriff der über den Umfang des inneren Führungsbauteils 3 radial vorspringenden Führungsflächen 4 bzw. 4a des inneren Führungsbauteils 1 ermöglichen. Dementsprechend sind bei der Anordnung gemäß Figur 1 die Führungsflächen 7 enthaltende, nach innen geöffnete, hier im Querschnitt halbkreisförmige Führungskanäle vorgesehen. Bei der Anordnung gemäß Figur 2 sind die Führungsflächen 7a enthaltende, nach innen geöffnete im Querschnitt etwa dreieckförmige Führungskanäle vorgesehen. Bei der Anordnung gemäß Figur 1 sind in die genannten Führungskanäle die Führungsflächen 7 enthaltende Halbschalen 8 eingeklebt. Diese sind zweckmäßig nicht durchgehend, sondern erstrecken sich nur über die Endbereiche der Führungskanäle.

Zur Bildung der genannten Führungskanäle ist an die betreffenden Wände des Profilabschnitts 6 jeweils ein mittig angeordneter, achsparalleler, im Querschnitt rinnenförmiger Steg 9 angeformt, dessen nach innen offene Rinne jeweils einen Führungskanal des gewünschten Querschnitts bildet. Von dem rinnenförmigen Steg 9 gehen zur Bildung der zugehörigen, führungsseitigen Wandung des kastenförmigen Profilabschnitts 6 seitliche Schenkel 10 ab, an deren Enden die Querwände 11 des Profilabschnitts 10 anschließen. Diese sind mit hinterschnittenen Klemmnuten 12 versehen, die einen Anbau der Längsführung an ein Maschinengestell bzw. einen Anbau eines Aggregats an die Längsführung erleichtern. Die Schenkel 10 sind dachförmig gegeneinander geneigt.

Der das äußere Führungsbauteil 2 bildende Profilabschnitt 6 liegt nur mit seinen Führungsflächen 7 bzw. 7a an den jeweils zugeordneten Führungsflächen 4 bzw. 4a des inneren Führungsbauteils 1 an. Außerhalb hiervon sind die einander zugewandten Oberflächen der beiden Führungsbauteile 1, 2 voneinander distanziert, so daß die führungsseitigen Wände insbesondere im Bereich der den rinnenförmigen Steg 9 flankierenden Schenkel 10 eine ausreichende Biegefreiheit haben. Es ist daher möglich, die die Führungsflächen 7 bzw. 7a enthaltenden Wände des äußeren Führungsbauteils 1 so zu verformen, daß eine exakte gegenseitige Anlage der inneren und äußeren Führungsflächen 4, 7 bzw. 4a, 7a erreicht wird. Hierzu ist der dem äußeren Führungsbauteil 2 zugrundeliegenden Profilabschnitt 6 zwischen zwei die führungsseitigen Wände des kastenförmigen Profilabschnitts 6 übergreifenden, zur oben erwähnten Spanneinrichtung gehörenden Spannbacken 13 eingespannt, die durch Spannschrauben 14 miteinander verbunden sind. Die Spannschrauben 14 verlaufen parallel zu den seitlichen Abflachungen des dem inneren Führungsbauteil 1 zugrundeliegenden Profilabschnitt 3, was eine zur Symmetrieebene der Führungsflächen parallele Spanneinrichtung ergibt und eine schlanke Bauweise mit den Profilabschnitt 3 innerhalb des dem äußeren Führungsbauteil 2 zugrundeliegenden Profilabschnitts 6 flankierenden Spannschrauben 14 ergibt. Die Spannbacken 13 können als aus Stahl bestehende, massive Preßformlinge ausgebildet sein, die eine hohe Biegesteifigkeit besitzen. Diese muß in jedem Falle größer als die Biegesteifigkeit der hieran anliegenden, führungsseitigen Wände des dem äußeren Führungsbauteil 2 zugrundeliegenden Profilabschnitts 6 sein. Die Spannbacken 13 sind ähnlich konfiguriert wie die hieran anliegenden Wände des Profilabschnitts 6. Die Spannbacken 13 besitzen dementsprechend ebenfalls jeweils einen mittig angeordneten, achsparallel verlaufenden, im querschnitt rinnenförmigen Steg 15 durch den zwei seitliche Schenkel verbunden werden, die wie die Schenkel 10 des dem inneren Führungsbauteil 2 zugrundeliegenden Profilabschnitt 6 von den Spannschrauben 14 durchgriffen werden. Der Steg 15 ergibt jeweils eine nach innen offene Rinne, in den der Steg 9 der zugeordneten Wandung des äußeren Führungsbauteils 2 eingreift. Die Querschnitte sind, wie schon angedeutet, so aneinander angepaßt, daß sich zumindest im Bereich der Symmetrieebene der Führungsflächen eine flächenförmige Anlage ergibt. Hierdurch wird eine auf die Führungsflächen konzentrierte Einleitung der Spannkräfte sichergestellt. Außerhalb des rinnenförmigen Mittelbereichs ergibt sich insbesondere infolge der dachförmigen Neigung der Schenkel 10 des dem äußeren Führungsbauteil 2 zugrundeliegenden Profilabschnitts 6 Freiraum zwischen den Spannbacken 13 und den benachbarten Wandbereichen des äußeren Führungsbauteils 2.

Durch Anziehen der Spannschrauben 14 kann ein zwischen den einander zugewandten inneren und äußeren Führungsflächen 4, 7 bzw. 4a, 7a vorhandenes Spiel verkleinert oder ganz ausgeschaltet werden. Falls erforderlich, ist es durch entsprechenden Anzug der Spannschrauben 14 auch möglich die beiden Führungsteile 1, 2 gegeneinander schwergängig zu machen bzw. gegeneinander zu blockieren. Beim Lösen der Spannschrauben 14 erfolgt in vorteilhafter Weise eine selbsttätige Rückfederung der elastisch verformten Bereiche des äußeren Führungsbauteils.

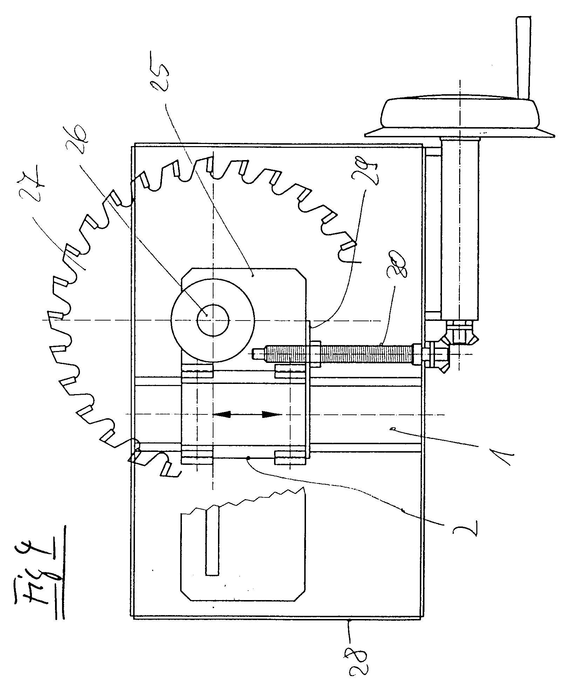

Der Figur 3 liegt eine Tischfräse mit tischartigem Maschinengestell 17 und stehend angeordneter, in axialer Richtung in der Höhe verstellbarer Spindel 18 zugrunde. Diese trägt an ihrem oberen, die Tischplatte durchstoßenden Ende einen Fräskopf 19 und ist an ihrem unteren Ende mit einem Antriebsrad 20 versehen, das über einen Riementrieb mittels eines parallel zur Spindel 18 angeordneten Motors 21 antreibbar ist. Der Motor 21 ist zusammen mit der Spindel 18 in der Höhe verstellbar. Die Spindel 18 ist hier im inneren Führungsbauteil 1 einer Längsführung oben umrissener Art drehbar gelagert. Dieses ist an seinem unteren Ende mit einer Auskragung 22 versehen, an der der Motor 21 angeflanscht ist und eine Verschiebeeinrichtung 23 angreift. Das vom inneren Führungsbauteil 1 durchgriffene äußere Führungsbauteil 2 ist am Maschinengestell befestigt. Dieses besitzt hierzu zwei das äußere Führungsbauteil 2 so zwischen sich aufnehmende Lagerschilde 24, daß die die Klemmbacken 13 durchgreifenden Spannschrauben 14 zugänglich sind. Das hier stationär angeordnete, äußere Führungsbauteil 2 kann in axialer Richtung wesentlich kürzer als das hier verschiebbare, innere Führungsbauteil 1 sein, das gleichzeitig als Lagerrohr für die Spindel 18 fungiert.

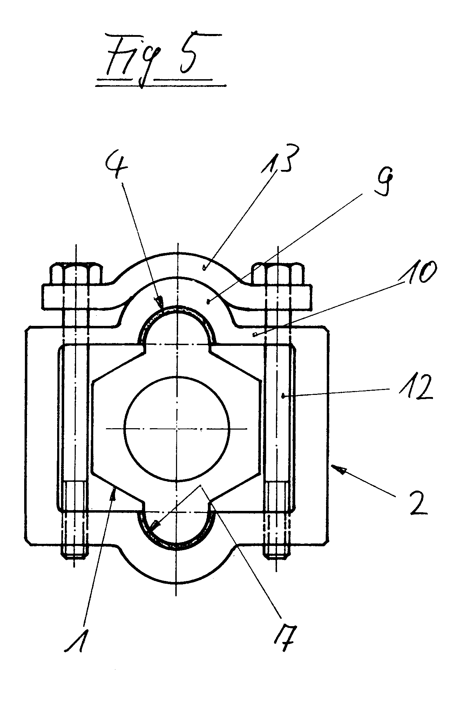

Das der Figur 4 zugrundeliegende Kreissägenaggregat enthält einen Antriebsmotor 25, auf dessen horizontale Welle 26 ein Kreissägenblatt 27 aufgespannt ist, das in einen zugeordneten Sägeblattkasten 28 eines nicht weiter dargestellten Maschinengestells eintaucht. Die Schnittiefe des Kreissägenblatts 27. d.h. die Austauchhöhe aus dem Kasten 28 ist einstellbar. Hierzu ist der das Kreissägenblatt 27 aufnehmende Motor 25 seinerseits an das äußere Führungsbauteil 2 einer Längsführung der den Figuren 1 bzw. 2 zugrundeliegenden Art angeflanscht. Es wäre auch möglich, das äußere Führungsbauteil 2 hier mit einem angeformten Ansatz zu versehen, der als Aufnahme für eine vom Motor separate Welle dienen kann, und den Antriebsmotor hieran anzuflanschen. Das innere Führungsbauteil 1 ist in den Sägeblattkasten 28 fest eingebaut. Hierzu ist das säulenartige, innere Führungsbauteil 1 mit seinen Enden an den oberen und unteren Flanken des Sägeblattkastens 28 befestigt. Die Länge des beweglichen, äußeren Führungsbauteils 2 ist kürzer als die Länge des säulenartigen, stationären Führungsbauteils 1, so daß der gewünschte Stellweg erreicht wird. Das bewegliche Führungsbauteil 2 ist hier mit einer Auskrakung 29 versehen, an der eine Stelleinrichtung 30 angreift.

Bei den vorstehend beschriebenen Beispielen ist das äußere Führungsbauteil 2 zwischen zwei durch die Spannschrauben 12 verbundene Spannbacken 13 eingespannt, so daß sich ein zur Mittelachse symmetrischer Aufbau und dementsprechend auch symmetrische Verformungsverhältnisse ergeben.

Es ist aber auch möglich, wie aus Figur 5 entnehmbar ist, lediglich eine biegesteife Spannbacke 13 vorzusehen und die an dieser nicht anliegende, sondern diese diametral gegenüberliegende, mit Führungsflächen versehene Wand des äußeren Führungsbauteils 2 vergleichsweise biegesteif auszuführen und durch Spannschrauben 12 mit der die gegenüberliegende, mit Führungsflächen versehene Wand des äußeren Führungsbauteils 2 übergreifenden Spannbacke 13 zu verbinden. In diesem Fall würde die erforderliche Verformung ganz oderjedenfalls im wesentlichen außerhalb der biegesteifen, praktisch gleichzeitig als Organ der Spanneinrichtung fungierenden Wand anfallen. Bei dem der Figur 5 zugrundeliegenden Beispiel besitzen nur die seitlichen Schenkel 10 der von der Spannbacke 13 übergriffenen Wand des äußeren Führungsbauteils 2 eine kleinere Wandstärke als die übrigen Wände und Wandbereiche des das äußere Führungsbauteil 2 bildenden Profilabschnitts. Die erforderliche Verformung wird daher im wesentlichen im Bereich dieser Schenkel 10 anfallen. Ansonsten entspricht die Anordnung gemäß Figur 5 der Anordnung gemäß Figur 1.

## Patentansprüche

1. Längsführung für Maschinenaggregate, insbesondere von Holzbearbeitungsmaschinen, mit wenigstens zwei mit Führungsflächen (4, 7; 4a, 7a) versehenen Führungsbauteilen (1, 2), von denen das eine das andere durchgreift und eines fest und eines verschiebbar angeordnet ist, **dadurch gekennzeichnet, daß** das innere Führungsbauteil (1) als biegesteifer Träger ausgebildet ist, der wenigstens zwei einander diametral gegenüberliegende, achsparallele Führungsflächen (4, 4a) aufweist, die quer zur Achsrichtung in formschlüssigem Eingriff mit zugeordneten Führungsflächen (7, 7a) des äußeren Führungsbauteils (2) sind, das als das innere Führungsbauteil (1) außerhalb der Führungsflächen (4, 7; 4a, 7a) mit Abstand umgreifendes Gehäuse ausgebildet ist, dessen die Führungsflächen (7, 7a) enthaltenden Bereiche mittels einer Spanneinrichtung (14, 15) zusammenspannbar sind.

2. Längsführung nach Anspruch 1, **dadurch gekennzeichnet, daß** die Spanneinrichtung wenigstens eine eine führungsflächenseitige Wand des äußeren Führungsbauteils (2) übergreifende Spannbacke (13) aufweist, die biegesteifer als die benachbarten Wände des äußeren Führungsbeiteils (2) ist und durch Spannorgane (14) mit einem diametral gegenüberliegenden, biegesteifen Element verbunden ist.

3. Längsführung nach Anspruch 2, **dadurch gekennzeichnet, daß** die Spanneinrichtung zwei diametral einander gegenüberliegende, biegesteife Spannbacken (13) aufweist, die durch die vorzugsweise als Zuganker ausgebildeten Spannorgane (14) miteinander verbunden sind.

4. Längsführung nach einem der vorhergehenden Ansprüche, **dadurch gekennzeichnet, daß** das innere Führungsbauteil (1) aus einem Stangen- oder Rohrprofilabschnitt (3) besteht, der umfangsseitig mit einander gegenüberliegenden, die Führungsflächen (4, 4a) enthaltenden Führungselementen (5, 5a) versehen ist.

5. Längsführung nach Anspruch 4, **dadurch gekennzeichnet, daß** die Führungselemente (5, 5a) über den Umfang des sie tragenden Profilabschnitts (3) in radialer Richtung vorspringen und vorzugsweise nach außen konvexe Führungsflächen (4, 4a) aufweisen.

6. Längsführung nach einem der vorhergehenden Ansprüche, 4 oder 5, **dadurch gekennzeichnet, daß** die Führungselemente (5) als in zugeordnete Rillen eingesetzte Führungsstangen ausgebildet sind.

7. Längsführung nach einem der vorhergehenden Ansprüche, **dadurch gekennzeichnet, daß** zumindest das äußere Führungsbauteil (2) als vorzugsweise aus Leichtmetall bestehenden Strangpreßprofilabschnitt (6) ausgebildet ist.

8. Längsführung nach einem der vorhergehenden Ansprüche, **dadurch gekennzeichnet, daß** das äußere Führungsbauteil (2) angeformte, die Führungsflächen (7, 7a) enthaltende Führungskanäle aufweist, die vorzugsweise nach innen konkav sind.

9. Längsführung nach Anspruch 8, **dadurch gekennzeichnet, daß** die die Führungskanäle enthaltenden Wände des äußeren Führungsbauteils (2) jeweils durch einen im Querschnitt rinnenförmigen Steg (9) miteinander verbundene, vorzugsweise dachförmig gegeneinander geneigte Schenkel (10) aufweisen, die außerhalb des rinnenförmigen Stegs (9) von den Spannorganen (14) durchgriffen sind und daß die die Führungskanäle aufweisenden Wände miteinander verbindenden Querwände (11) mit hinterschnittenen Klemmnuten (12) versehen sind.

10. Längsführung nach einem der vorhergehenden Ansprüche 8 oder 9, **dadurch gekennzeichnet, daß** die Führungskanäle mit eingelegten Lager-Halbschalen (8) versehen sind.

11. Längsführung nach einem der vorhergehenden Ansprüche, **dadurch gekennzeichnet, daß** die vorzugsweise als aus Stahl bestehende Preßformlinge ausgebildeten Spannbacke bzw. -backen (13) jeweils eine den rinnenförmigen Steg (9) der benachbarten Wandung des äußeren Führungsbauteils (2) aufnehmende, nach innen offene Rinne aufweisen, wobei jeweils durch einen im Querschnitt rinnenförmigen Steg (15) miteinander verbundene Schenkel (16) vorgesehen sind, die außerhalb des rinnenförmigen Stegs (15) von den Spannorganen (14) durchgriffen sind.

12. Längsführung nach einem der vorhergehenden Ansprüche für eine axial verstellbare, vorzugsweise stehend angeordnete Spindel, insbesondere Frässpindel, **dadurch gekennzeichnet, daß** das äußere Führungsbauteil (2) am Maschinengestell (17) befestigt und die Spindel (18) im inneren, mittels einer Stelleinrichtung (23) verschiebbaren Führungsbauteil (1) drehbar gelagert ist, an dem ein der Spindel (18) zugeordneter Antriebsmotor (21) befestigt ist.

13. Längsführung nach einem der vorhergehenden Ansprüche 1 bis 12 für eine quer zur Achsrichtung verstellbare, vorzugsweise liegend angeordnete, ein Werkzeug, insbesondere ein Kreissägenblatt, tragende Welle, **dadurch gekennzeichnet, daß** das innere Führungsbauteil (1) am Maschinengestell (28) befestigt ist und daß das äußere Führungsbauteil (2) einen die Welle (26) enthaltenden Antriebsmotor (25) trägt.
